# EUROPÄISCHE PATENTSCHRIFT

(11) **EP 1 615 714 B1**
(45) Veröffentlichungstag und Bekanntmachung des Hinweises auf die Patenterteilung: **11.10.2006**
(21) Anmeldenummer: 04719466.7
(22) Anmeldetag: 11.03.2004
(51) Int. Cl.: B01D 53/94, F01N 3/20, F01N 11/00, G01L 19/04

(54) **VERFAHREN ZUR DOSIERUNG EINES REAGENZMITTELS IN DEN ABGASSTROM EINER BRENNKRAFTMASCHINE**
METHOD FOR DOSING A REAGENT IN THE WASTE GAS FLOW OF AN INTERNAL COMBUSTION ENGINE
PROCEDE POUR DOSER UN AGENT DE REACTIF DANS LE FLUX DE GAZ D'ECHAPPEMENT D'UN MOTEUR COMBUSTION INTERNE

(30) Priorität: 09.04.2003 DE 10316184
(43) Veröffentlichungstag der Anmeldung: 18.01.2006
(73) Patentinhaber: ROBERT BOSCH GMBH, 70442 Stuttgart (DE)
(72) Erfinder: GERLACH, Michael, 71336 Waiblingen-Neustadt (DE)
(74) Vertreter: Lochmahr, Gunnar
(86) Internationale Anmeldenummer: PCT/EP2004/050287
(87) Internationale Veröffentlichungsnummer: WO 2004/089516

(56) Entgegenhaltungen:
- EP-A- 1 201 890
- WO-A-01/06098
- WO-A-96/08639
- DE-A- 4 432 577

## Beschreibung

### Stand der Technik

Die Erfindung geht aus von einem Verfahren zur Dosierung eines Reagenzmittels in den Abgasstrom einer Brennkraftmaschine nach der Gattung des unabhängigen Anspruchs.

In der DE 101 39 142 A1 ist eine Messvorrichtung zur Ermittlung einer Konzentration einer Harnstoff-Wasser-Lösung beschrieben, die als Reagenzmittel für einen NOx-Speicherkatalysator in den Abgasstrom einer Brennkraftmaschine eingebracht wird. Aus der Harnstoff-Wasser-Lösung wird Ammoniak gewonnen, der in einer Regenerationsphase des NOx-Speicherkatalysators eine Reduktion von Stickoxiden bewirkt. Vorgesehen ist eine Ermittlung der Konzentration der Harnstoff-Wasser-Lösung, wodurch eine präzise Dosierung des Reduktionsmittels in den Abgasstrom realisierbar ist. Zur Ermittlung der Konzentration ist ein indirektes Messverfahren vorgesehen, bei dem der Dampfdruck der in einem Speichergefäß gelagerten Harnstoff-Wasser-Lösung mit einem Drucksensor gemessen wird. Der Dampfdruck entsteht durch das aufgrund der Hydrolyse des Harnstoffs erzeugten Ammoniaks plus dem Dampfdruck des Lösungsmittels Wasser, sodass eine Auswerteeinheit die auf Grund der Ausstattung entsprechend verringerte Harnstoffmenge bzw. Harnstoff-Konzentration in der Harnstoff-Wasser-Lösung ermitteln kann.

Vorgesehen ist weiterhin ein Temperatursensor zur Erfassung der Temperatur der Harnstoff-Wasser-Lösung. Mit dem Signal des Temperatursensors kann die Abhängigkeit des Drucks von der Temperatur berücksichtigt werden. Die Harnstoff-Wasser-Lösung hat einen Gefrierpunkt, der bei etwa -11 Grad Celsius liegt. Sofern die vorbekannte Dosiervorrichtung Umgebungsbedingungen ausgesetzt ist, kann ein Einfrieren der Harnstoff-Wasser-Lösung nicht ausgeschlossen werden. Der mit dem Einfrieren verbundene Dichtesprung belastet mechanisch die Bauteile, die mit der Harnstoff-Wasser-Lösung gefüllt sind.

Der Erfindung liegt die Aufgabe zugrunde, ein Verfahren zur Dosierung eines Reagenzmittels in den Abgasstrom einer Brennkraftmaschine anzugeben, das die Zuverlässigkeit erhöht.

Die Aufgabe wird durch die im unabhängigen Anspruch angegebenen Merkmale gelöst.

### Vorteile der Erfindung

das erfindungsgemäße Verfahren zur Dosierung eines Reagenzmittels in den Abgasstrom einer Brennkraftmaschine, bei dem das Reagenzmittel in wenigstens einem Bauteil geführt wird und bei dem ein Maß für die Temperatur des Bauteils erfasst wird, sieht vor, dass das Maß für die Temperatur mit einem vorgegebenen Temperatur-Schwellenwert verglichen wird, dass die Anzahl der Schwellenüberschreitungen in einem Zähler gezählt wird, dass ein Zähl-Schwellenwert für die Anzahl der Schwellenüberschreitung vorgegeben wird und dass bei einer Überschreitung des Zähl-Schwellenwerts ein Servicesignal bereitgestellt wird.

Das erfindungsgemäße Verfahren ermöglicht es, ein einmaliges oder vorzugsweise mehrmaliges Überschreiten des Temperatur-Schwellenwerts zu detektieren und daraufhin das Servicesignal bereitzustellen. Das Maß für die Temperatur des Bauteils spiegelt gleichermaßen die Temperatur des Reagenzmittels wieder. Der Temperatur-Schwellenwert ist beispielsweise auf einen Wert festgelegt, bei dem sich eine Eigenschaft des Reagenzmittels ändert. Das Servicesignal zeigt dann an, dass sich die Eigenschaft des Reagenzmittels ein- oder mehrmals geändert hat. Das Servicesignal kann als Hinweis verwendet werden, dass beispielsweise das Bauteil, in welchem das Reagenzmittel geführt wird, oder das Reagenzmittel selbst ausgetauscht werden soll. Das erfindungsgemäße Verfahren erhöht damit die Zuverlässigkeit der Dosierung des Reagenzmittels in den Abgasstrom der Brennkraftmaschine.

Vorteilhafte Weiterbildungen und Ausgestaltungen des erfindungsgemäßen Verfahrens ergeben sich aus abhängigen Ansprüchen.

Eine Ausgestaltung sieht vor, dass der Temperatur-Schwellenwert der Gefrier-Temperatur des Reagenzmittels entspricht. Mit dieser Ausgestaltung kann ein Gefrieren des Reagenzmittels oder beispielsweise eine mögliche Vereisung des Bauteils mit dem darin gegebenenfalls enthaltenen Reagenzmittel detektiert werden.

Eine Ausgestaltung sieht vor, dass nach dem Abschalten der Brennkraftmaschine während eines Nachlaufs ermittelt wird, ob das Bauteil mit dem Reagenzmittel gefüllt ist Mit dieser Maßnahme können die weiteren Entscheidungen davon abhängig gemacht werden, ob sich nach dem Abstellen der Brennkraftmaschine noch Reagenzmittel im Bauteil befindet.

Diese Ausgestaltung bildet die Grundlage für die weitere erfindungsgemäße Ausgestaltung, gemäß der der Zähler als Eiszähler ausgebildet ist. Der Eiszähler zählt eine Überschreitung des Temperatur-Schwellenwerts nur dann, wenn das Bauteil mit dem gefrorenen Reagenzmittel gefüllt ist Damit kann zuverlässig detektiert werden, wie oft das mit dem Reagenzmittel gefüllte Bauteil eingefroren ist und ob die Anzahl der Einfriervorgänge den Zähler-Schwellenwert überschritten hat. Das Servicesignal kann als Hinweis gesehen werden, das Bauteil zu testen und erforderlichenfalls auszutauschen.

Eine Ausgestaltung sieht vor, dass bei der Ermittlung, ob das Bauteil mit dem Reagenzmittel gefüllt ist, ein Druckluftsignal bewertet wird. In Abhängigkeit von einer konkreten Ausgestaltung der Dosierung des Reagenzmittels kann eine Ausblasung des Bauteils vom Reagenzmittel durch die Druckluft vorgesehen sein. Damit kann sichergestellt werden, dass sich beispielsweise nach dem Abstellen der Brennkraftmaschine kein Reagenzmittel mehr im Bauteil befindet.

Eine andere Ausgestaltung sieht vor, dass bei der Ermittlung, ob das Bauteil mit dem Reagenzmittel gefüllt ist, die Betätigung eines Not-Aus-Schalters berücksichtigt wird. Im Allgemeinen wird die Betätigung des Not-Aus-Schalters einen Nachlauf verhindern, sodass davon ausgegangen werden kann, dass das Bauteil mit dem Reagenzmittel gefüllt ist.

Eine Ausgestaltung sieht vor, dass eine Überschreitung des Temperatur-Schwellenwerts nur beim Start der Brennkraftmaschine gezählt wird. Mit dieser Maßnahme wird der Zeitpunkt der Zählung der einzelnen Überschreitungen des Temperatur-Schwellenwerts genau festgelegt. Sofern es sich bei der Überschreitung des Temperatur-Schwellenwerts um eine Überschreitung nach tieferen Temperaturen hin handelt, kann davon ausgegangen werden, dass die kälteste Temperatur beim Startvorgang vorliegt.

Eine Ausgestaltung sieht vor, dass das Maß für die Temperatur des Bauteils aus dem Signal wenigstens eines Temperatursensors gewonnen wird. Der Temperatursensor kann beispielsweise die Temperatur des Bauteils oder die Lufttemperatur erfassen.

Weitere vorteilhafte Ausgestaltungen und Weiterbildungen des erfindungsgemäßen Verfahrens ergeben sich aus der folgenden Beschreibung.

### Zeichnung

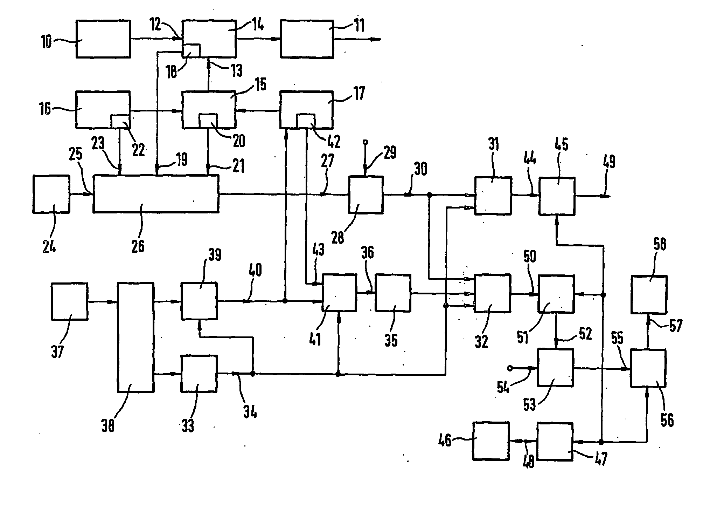

Die Figur zeigt ein technisches Umfeld, in welchem ein erfindungsgemäßes Verfahren abläuft.

Die Figur zeigt eine Brennkraftmaschine 10, der ein Katalysator 11 zur Abgasreinigung nachgeschaltet ist. Zur Zugabe eines Reagenzmittels 13 in den Abgasstrom 12 der Brennkraftmaschine 10 ist ein Dosierventil 14 vorgesehen. Das Reagenzmittel 13 wird von einer Reagenzmittelpumpe 15 bereitgestellt, die das Reagenzmittel 13 aus einem Reagenzmitteltank 16 bezieht. Sowohl die Reagenzmittelpumpe 15 als auch das Dosierventil 14 können mit der Druckluft ausgeblasen werden, die von einem Kompressor 17 bereitgestellt wird.

Das von einem Dosierventil-Temperatursensor 18, der dem Dosierventil 14 zugeordnet ist, bereitgestellte Dosierventil-Temperatursignal 19, das von einem Reagenzmittelpumpe-Temperatursensor 20, welcher der Reagenzmittelpumpe 15 zugeordnet ist, bereitgestellte Reagenzmittelpumpe-Temperatursignal 21, das von einem Reagenzmitteltank-Temperatmensor 22, der dem Reagenzmitteltank 16 zugeordnet ist, bereitgestellte Reagenzmitteltank-Temperatursignal 23 sowie das von einem Temperatursensor 24 bereitgestellte Temperatursensorsignal 25 werden einer Temperaturauswahl 26 zugeführt, die ein Temperatursignal 27 an einen ersten Vergleicher 28 abgibt.

Der erste Vergleicher 28 vergleicht das Temperatursignal 27 mit einem Temperatur-Schwellenwert 29 und gibt in Abhängigkeit vom Vergleichsergebnis ein Temperatur-Warnsignal 30 sowohl an eine erste UND-Verknüpfung 31 als auch an eine zweite UND-Verknüpfung 32 ab. Die beiden UND-Verlmüpfungen 31,32 erhalten weiterhin das von einem Schlüsselschalter 33 bereitgestellte Klemme-15-Signal 34 zugeleitet. Die zweite UND-Verknüpfung 32 erhält zusätzlich einen von einem Speicher 35 gespeichertes Ausblas-Fehlersignal 36 zugeführt.

Ein Bordnetz 37 ist über einen Not-Aus-Schalter 38 sowohl mit dem Schlüsselschalter 33 als auch mit einer Nachlaufsteuerung 39 verbunden. Die Nachlaufsteuerung 39 ist weiterhin mit dem Klemme-15-Signal 34 verbunden. Die Nachlaufsteuerung 39 gibt ein Nachlaufsignal 40 sowohl an den Kompressor 17 als auch an einen Ausblasdetektor 41 ab. Der Ausblasdetektor 41, der das Ausblas-Fehlersignal 36 an den Speicher 35 abgibt, erhält weiterhin ein von einem dem Kompressor 17 zugeordneten Druckluftsensor 42 bereitgestelltes Druckluflsignal 43 zugeführt.

Die erste UND-Verknüpfung 31 gibt ein Gefrierzählsignal 44 an einen Gefrierzähler 45 ab, dem weiterhin ein von einem Diagnosegerät 46 über eine Diagnoseschnittstelle 47 bereitgestelltes Diagnosesignal 48 zugeführt wird, und der ein Gefrierzählersignal 49 bereitstellt.

Die zweite UND-Verknüpfung 32 gibt ein Eiszählsignal 50 an einen Eiszähler 51 ab, der ein Eiszählersignal 52 an einen zweiten Vergleicher 53 weitergibt. Der zweite Vergleicher 53 vergleicht das Eiszählersignal 52 mit einem Zahl-Schwellenwert 54 und gibt in Abhängigkeit vom Vergleich ein Servicesignal 55 an einen Servicesignalspeicher 56 ab. Sowohl dem Servicesignalspeicher 56 als auch dem Eiszähler 51 werden das Diagnosesignal 48 zugeführt. Der Servicesignalspeicher 56 gibt ein Schaltsignal 57 an eine Serviceanzeige 58 ab.

### Das erfindungsgemäße Verfahren arbeitet folgendermaßen:

Der im Abgasstrom 12 der Brennkraftmaschine 10 angeordneter Katalysator 11 reinigt die zumindest einer Komponente der Abgase der Brennkraftmaschine 10. Der Katalysator 11 ist vorzugsweise als SCR- (Selectiv-Catalytic-Reduction) Katalysator ausgebildet, der im Zusammenwirken mit dem Reagenzmittel 13 wenigstens eine Abgaskomponente, vorzugsweise NOx, weitgehend unschädlich macht. Das Reagenzmittel 13 ist beispielsweise eine Harnstoff-Wasser-Lösung, die das Dosierventil 14 in den Abgasstrom 12 einbringt. Im Abgasstrom 12 oder an einem nicht gezeigten Bauteil wird aus der Harnstoff-Wasser-Lösung Ammoniak gewonnen, das im SCR-Katalysator als Reduktionsmittel dient.

Das Reagenzmittel 13 ist im Reagenzmitteltank 16 untergebracht, aus dem es von der Reagenzmittelpumpe 15 zum Dosierventil 14 gefördert wird. Das Dosierventil 14 kann mit oder ohne Luftunterstützung ausgestaltet sein. Im Falle eines luftunterstützten Dosierventils 14 wird die erforderliche Druckluft von dem Kompressor 17 bereitgestellt. Die Druckluft gelangt dann vorzugsweise unmittelbar an das Dosierventil 14.

Gemäß einer vorteilhaften Ausgestaltung ist nach dem Abstellen der Brennkraftmaschine 10 eine Ausblasung des Reagenzmittels 13 aus dem Dosierventil 14, der Reagenzmittelpumpe 15 sowie weiterer nicht näher gezeigter Bauteile vorgesehen. Mit dieser Maßnahme wird erreicht, dass die Bauteile, wie beispielsweise das Dosierventil 14 und/oder die Reagenzmittelpumpe 15 nach dem Abstellen der Brennkraftmaschine 10 geschützt werden. Bei längerem Einwirken könnte beispielsweise eine Korrosion oder eine Versprödung auftreten. Insbesondere aber kann mit der Maßnahme ein Einfrieren der mit dem Reagenzmittel 13 gefülltem Bauteil 14, 15 vermieden werden.

Zur Erfassung der Temperatur und des Bauteils 14, 15 ist vorzugsweise zumindest ein Temperatursensor vorgesehen. Im gezeigten Ausführungsbeispiel ist der dem Dosierventil 14 zugeordnete Dosierventil-Temperatursensor 18, der der Reagenzmittelpumpe 15 zugeordnete Reagenzmittelpumpe-Temperatursensor 20, der dem Reagenzmitteltank 16 zugeordnete Reagenzmitteltank-Temperatursensor 22 sowie der Temperatursensor 24 vorgesehen. Der Temperatursensor 24 erfasst vorzugsweise die Lufttemperatur. Der Temperatursensor 24 kann beispielsweise in einem nicht näher gezeigten Ansaugbereich der Brennkraftmaschine 10 oder in einer ebenfalls nicht gezeigten Klimaanlage angeordnet sein, sofern die Brennkraftmaschine 10 in einem Kraftfahrzeug angeordnet ist.

Der wenigstens eine Temperatursensor 18, 20, 22, 24 erfasst vorzugsweise ein Maß für die Temperatur des empfindlichsten Bauteils 14,15. Das Maß für die Temperatur des Bauteils 14, 15 ist gleichermaßen ein Maß für die Temperatur des Reagenzmittels 13. Die von den Temperatursensoren 18, 20, 22, 24 bereitgestellten Temperatursignale 19, 21, 23, 25 werden der Temperaturauswahl 26 zugeführt, die eines der Temperatursignale 19, 21, 23, 25 als Temperatursignal 27 dem ersten Vergleicher 23 weiterleitet. Der erste Vergleicher gibt bei jedem Über- oder Unterschreiten des Temperatur-Schwellenwerts 29 durch das Temperatursignal 27 das Temperatur-Warnsignal 30 ab. Die Temperaturauswahl 26 kann beispielsweise die höchste oder die niedrigste Temperatur als Temperatursignal 27 weiterleiten. Gegebenenfalls kann eine bestimmte Auswahl festgelegt werden.

Mit der erfindungsgemäß vorgesehenen Maßnahme können jedes Unter- oder Überschreiten des Temperatur-Schwellenwerts 29 durch das Temperatursignal 27 gezählt und bei Überschreiten des Zähl-Schwellenwerts 54 das Servicesignal 55 bereitgestellt werden. Die Temperatursignale 19,21,23,25 ermöglichen insbesondere das Erkennen eines Einfrieren wenigstens eines Bauteils 14, 15, das mit dem Reagenzmittel 13 gefüllt ist. Der Gefrierpunkt einer Harnstoff-Wasser-Lösung, die als Reagenzmittel 13 vorgesehen sein kann, liegt wenigstens näherungsweise bei - 11 Grad Celsius. Diese Temperatur kann im Winter ohne weiteres erreicht bzw. unterschritten werden. Im Folgenden wird nur ein solches Unterschreiten des Gefrierpunkts des Reagenzmittels 13 betrachtet.

Der Gefrierzähler 45 zählt jedes Auftreten des Gefrierzählsignals 44, das bei in jedem Auftreten des Temperatur-Warnsignals 30 auftritt, sofern die UND- Bedingung in der ersten UND-Verknüpfung 31 erfüllt ist. Die UND-Bedingung sieht vor, dass gleichzeitig mit dem Auftreten des Temperatur-Warnsignals 30 das Klemme-15-Signal 34 vorliegen muss, welches der Schlüsselschalter 33 bereitstellt. Das Klemme-15-Signal hat die Bedeutung, dass eine Bedienperson den Schlüsselschalter 33 zum Starten der Brennkraftmaschine 10 betätigt hat und dass der Schlüsselschalter 33 über den Not-Aus-Schalter 38 mit dem Bordnetz 37 zur Energieversorgung der gesamten Anlage verbunden ist. Mit dieser Maßnahme wird erreicht, dass das Gefrierzählsignal 44 in der ersten UND-Verknüpfung 31 nur nach dem Starten der Brennkraftmaschine 10 auftreten kann. Der Gefrierzähler 45 zählt das Auftreten des Gefrierzählsignals 44 und gibt das Gefrierzählersignal 49 ab. Das Gefrierzählersignal 49 kann beispielsweise mit einem vorgegebenen Grenzwert verglichen werden, wobei bei einem Überschreiten des Grenzwerts eine vorgegebene Maßnahme ergriffen werden kann.

Beispielsweise kann das Gefrierzählersignal 49 im Gefrierzähler 45 gespeichert bleiben und zu Diagnosezwecken von einem gegebenenfalls über die Diagnoseschnittstelle 47 angeschlossenes Diagnosegerät 46 ausgelesen werden. Weiterhin kann der Gefrierzähler 45 mit dem Diagnosesignal 48 gelöscht werden.

Besonders vorteilhaft ist die Maßnahme, dass nur dann die Temperatur-Warnsignale 30 gezählt werden, wenn das Bauteil 14,15 mit dem Reagenzmittel 13 gefüllt ist, sodass beim Auftreten des Temperatur-Warnsignals 30 von einer Vereisung des Bauteils 14,15 ausgegangen werden kann. Durch den beim Vereisen auftretenden Dichtesprung des Reagenzmittels 13 kann das Bauteil 14, 15 beschädigt werden.

Sofern bereits ein einmaliges Einfrieren des Bauteils 14, 15 kritisch ist, kann der Zähl-Schwellenwert 54 auf die Zahl Eins gesetzt werden. Das bedeutet, dass jedes einzelne Überschreiten des Zähl-Schwellenwerts 54 zum Auftreten des Servicesignals 45 führt. In Versuchsreihen wurde festgestellt, dass in der Praxis mehr als eine Vereisung, beispielsweise 50 Vereisungen überstanden werden, bis mit einem Ausfall gerechnet werden muss. Als besonders gefährdet hat sich das Dosierventil 14 herausgestellt. Gleichermaßen hat es sich herausgestellt, dass es ausreichend ist, das vom Reagenzmittelpampe-Temperatursensor 20 bereitgestellte Reagenzmittelpumpe-Temperatursignal 21 als Maß für die Temperatur des Dosierventils 14 bzw. des Reagenzmittels 13 im Dosierventil 14 heranzuziehen.

Da davon auszugehen ist, dass während des Betriebs der Brennkraftmaschine 10 ein Einfrieren des Reagenzmittels 13 durch Beheizung wenigstens eines der Bauteile 14, 15 oder unmittelbar des Reagenzmittels 13 nicht auftritt, kann davon ausgegangen werden, dass ein Einfrieren des Bauteils 14,15 nur im abgestellten Zustand der Brennkraftmaschine 10 auftreten wird.

Vorteilhafterweise wird deshalb festgestellt, ob das Bauteil 14, 15 im abgestellten Zustand der Brennkraftmaschine 10 mit dem Reagenzmittel 13 gefüllt ist. Gemäß einem ersten Ausführungsbeispiel wird hierzu das Druckluftsignal 43 bewertet. Die Nachlaufsteuerung 39 steuert nach dem Betätigen des Schlüsselschalters 33 zum Abstellen der Brennkraftmaschine 10 der Kompressor 17 mit dem Nachlaufsignal 40 noch für eine vorgegebene Zeit an, in der das Bauteil 14, 15 von der Druckluft gespült und das Reagenzmittel 13 ausgeblasen wird.

Zunächst kann der Fall eintreten, dass während der Nachlaufzeit der Luftdruck nicht ausreicht oder überhaupt keine Druckluft zur Verfügung steht. Dieser Zustand wird vom Druckluftsensor 42 erfasst, der beispielsweise dem Kompressor 17 zugeordnet ist. Der Ausblasdetektor 40 stellt anhand des Druckluftsignals 43 fest, dass ein Fehler aufgetreten ist und gibt das Ausblas-Fehlersignal 36 an den Speicher 35 ab. Der Speicher 35 hat die Aufgabe, das Ausblas-Fehlersignal 36 bis zum nächsten Betätigen des Schlüsselschalters 33 zu speichern.

Gemäß einem anderen Ausführungsbeispiel wird das Betätigen des Not-Aus-Schalters 38 berücksichtigt. Der Not-Aus-Schalter 38 trennt nicht nur den Schlüsselschalter 33 sondern auch die Nachlaufsteuerung 39 vollständig vom Bordnetz 37, sodass ein Ausblasen der Bauteile 14, 15 mit der Druckluft nicht stattfinden kann. Dieser Zustand kann im Ausblasdetektor 40 anhand des Nachlaufsignals 40 und des Klemme-15-Signals 34 festgestellt werden. Wenn bei vorliegendem Klemme-15-Signal 34 kein Nachlaufsignal 40 auftritt, wird das Ausblas-Fehlersignal 36 an den Speicher 35 ausgegeben.

Die zweite UND-Verknüpfung 32 gibt bei der erfüllten UND-Bedingung das Eiszählsignal 50 an den Eiszähler 51 ab. Das vom Eiszähler 51 bereitgestellte Eiszählersignal 52 vergleicht der zweite Vergleicher 53 mit dem Zähl-Schwellenwert 54. Bei Überschreiten des Zähl-Schwellenwerts 54 wird das Servicesignal 55 bereitgestellt und im Servicesignalspeicher 56 gespeichert. Gleichzeitig kann mit dem Schaltsignal 57 die Serviceanzeige 58 angesteuert werden.

Das gespeicherte Servicesignal 55 kann während einer Diagnose von dem Diagnosegerät 46 mit dem Diagnosesignal 48 ausgelesen werden. Gleichzeitig kann das gespeicherte Servicesignal 55 sowie der Eiszähler 51 mit dem Diagnosesignal 48 gelöscht und die Serviceanzeige 58 zurückgesetzt werden. Das Auftreten des Servicesignals 55 gibt hierbei einen Hinweis, dass das Bauteil 14,15 auf Grund der Überschreitung der vorgegebenen Anzahl von Einfriervorgängen getestet und gegebenenfalls ausgetauscht werden soll.

## Patentansprüche

1. Verfahren zur Dosierung eines Reagenzmittels (13) in den Abgasstrom (12) einer Brennkraftmaschine (10), bei dem das Reägenzmittel (13) in wenigstens einem Bauteil (14,15) geführt wird und bei dem ein Maß für die Temperatur des Bauteils (14,15) erfasst wird, **dadurch gekennzeichnet, dass** das Maß für die Temperatur mit einem vorgegebenen Temperatur-Schwellenwert (29) verglichen wird, dass die Anzahl der Schwellenüberschreitungen in einem Zähler (45, 51) gezählt wird, dass ein Zähl-Schwellenwert (54) für die Anzahl der Schwellenüberschreitung vorgegeben wird und dass bei einer Überschreitung des Zähl-Schwellenwerts (54) ein Servicesignal (55) bereitgestellt wird.

2. Verfahren nach Anspruch 1, **dadurch gekennzeichnet, dass** der Temperatur-Schwellenwert (29) der Gefrier-Temperatur des Reagenzmittels (13) entspricht.

3. Verfahren nach Anspruch 1 oder 2, **dadurch gekennzeichnet, dass** nach dem Abschalten der Brennkraftmaschine (10) während eines Nachlaufs ermittelt wird, ob das Bauteil (14, 15) mit dem Reagenzmittel (13) gefüllt ist.

4. Verfahren nach Anspruch 3, **dadurch gekennzeichnet, dass** der Zähler (51) als Eiszähler ausgebildet ist und dass der Eiszähler eine Überschreitung des Temperatur-Schwellenwerts (29) nur dann zählt wenn das Bauteil (14,15) mit dem gefrorenen Reagenzmittel (13) gefüllt ist.

5. Verfahren nach Anspruch 3, **dadurch gekennzeichnet, dass** bei der Ermittlung, ob das Bauteil (14, 15) mit dem Reagenzmittel (13) gefüllt ist, ein Druckluftsignal (43) bewertet wird.

6. Verfahren nach Anspruch 3, **dadurch gekennzeichnet, dass** bei der Ermittlung, ob das Bauteil (14, 15) mit dem Reagenzmittel (13) gefüllt ist, die Betätigung eines Not-Aus-Schalters (38) berücksichtigt wird.

7. Verfahren nach Anspruch nach einem der vorhergehenden Ansprüche, **dadurch gekennzeichnet, dass** eine Überschreitung des Temperatur-Schwellenwerts (29) nur beim Start der Brennkraftmaschine (10) gezählt wird.

8. Verfahren nach einem der vorhergehenden Ansprüche, **dadurch gekennzeichnet, dass** das Maß für die Temperatur des Bauteils (14, 15) aus dem Signal wenigstens eines Temperatursensors (18, 20, 22, 24) gewonnen wird.

9. Verfahren nach Anspruch 8, **dadurch gekennzeichnet, dass** der Temperatursensor (18, 20) die Temperatur des Bauteils (14, 15) erfasst.

10. Verfahren nach Anspruch 8, **dadurch gekennzeichnet, dass** der Temperatursensor (24) die Lufttemperatur erfasst.

## Claims

1. Method for dosing a reagent (13) in the exhaust flow (12) of an internal combustion engine (10), in which the reagent (13) is carried in at least one component (14, 15) and in which a measure of the temperature of the component (14, 15) is sensed, **characterized in that** the measure of the temperature is compared with a predetermined temperature threshold value (29), **in that** the number of times the threshold is overshot is counted in a counter (45, 51), **in that** a counting threshold value (54) is prescribed for the number of times the threshold can be overshot and **in that**, if the counting threshold value (54) is overshot, a service signal (55) is provided.

2. Method according to Claim 1, **characterized in that** the temperature threshold value (29) corresponds to the freezing temperature of the reagent (13).

3. Method according to Claim 1 or 2, **characterized in that**, after switching off the internal combustion engine (10), it is determined during a coasting phase whether the component (14, 15) is filled with the reagent (13).

4. Method according to Claim 3, **characterized in that** the counter (51) is formed as an ice counter and **in that** the ice counter only counts an overshoot of the temperature threshold value (29) if the component (14, 15) is filled with the frozen reagent (13).

5. Method according to Claim 3, **characterized in that**, in the determination whether the component (14, 15) is filled with the reagent (13), a compressed air signal (43) is assessed.

6. Method according to Claim 3, **characterized in that**, in the determination whether the component (14, 15) is filled with the reagent (13), the actuation of an emergency-off switch (38) is taken into account.

7. Method according to one of the preceding claims, **characterized in that** an overshoot of the temperature threshold value (29) is only counted when the internal combustion engine (10) is started.

8. Method according to one of the preceding claims, **characterized in that** the measure of the temperature of the component (14, 15) is obtained from the signal of at least one temperature sensor (18, 20, 22, 24).

9. Method according to Claim 8, **characterized in that** the temperature sensor (18, 20) senses the temperature of the component (14, 15).

10. Method according to Claim 8, **characterized in that** the temperature sensor (24) senses the air temperature.

## Revendications

1. Procédé de dosage d'un agent réactif (13) dans l'écoulement de gaz d'échappement (12) d'un moteur à combustion interne (10), selon lequel l'agent réactif (13) est guidé dans au moins un composant (14, 15) et on enregistre une mesure pour la température du composant (14, 15),
**caractérisé en ce qu'**
on compare la mesure pour la température à une valeur seuil de température (29) prédéterminée, on compte le nombre de dépassements du seuil dans un compteur (45, 51), on prédétermine une valeur seuil de comptage (54) pour le nombre de dépassements du seuil et, en cas de dépassement de la valeur seuil de comptage (54), on émet un signal de service (55).

2. Procédé selon la revendication 1,
**caractérisé en ce que**
la valeur seuil de température (29) est égale à la température de congélation de l'agent réactif (13).

3. Procédé selon la revendication 1 ou 2,
**caractérisé en ce qu'**
après la coupure du moteur à combustion interne (10), on détermine pendant un post-fonctionnement si le composant (14, 15) est rempli de l'agent réactif (13).

4. Procédé selon la revendication 3,
**caractérisé en ce que**
le compteur est sous forme de compteur de gel et le compteur de gel compte un dépassement de la valeur seuil de température (29) seulement lorsque le composant (14, 15) est rempli de l'agent réactif (13) congelé.

5. Procédé selon la revendication 3,
**caractérisé en ce qu'**
un signal d'air comprimé (3) est évalué lorsqu'on détermine si le composant (14, 15) est rempli de l'agent réactif (13).

6. Procédé selon la revendication 3,
**caractérisé en ce que**
l'actionnement d'un interrupteur d'arrêt d'urgence (38) est pris en compte lorsqu'on détermine si le composant (14, 15) est rempli de l'agent réactif (13).

7. Procédé selon l'une des revendications précédentes,
**caractérisé en ce qu'**
un dépassement de la valeur seuil de température (29) est compté seulement au démarrage du moteur à combustion interne (10).

8. Procédé selon l'une des revendications précédentes,
**caractérisé en ce que**
la mesure pour la température du composant (14, 15) est obtenue à partir du signal d'au moins un capteur de température (18, 20, 22 ,24).

9. Procédé selon la revendication 8,
**caractérisé en ce que**
le capteur de température (18, 20) saisit la température du composant (14, 15).

10. Procédé selon la revendication 8,
**caractérisé en ce que**
le capteur de température (24) saisit la température de l'air.
